(19) Europäisches Patentamt
European Patent Office
Office européen des brevets

(11) **EP 2 537 789 B1**

(12) **EUROPÄISCHE PATENTSCHRIFT**

(45) Veröffentlichungstag und Bekanntmachung des Hinweises auf die Patenterteilung:
**08.03.2017 Patentblatt 2017/10**

(51) Int Cl.:
***B66B 1/30*** *(2006.01)*   ***H02P 23/14*** *(2006.01)*
***H02P 21/14*** *(2016.01)*

(21) Anmeldenummer: **12171804.3**

(22) Anmeldetag: **13.06.2012**

(54) **Verfahren zum Ermitteln des Trägheitsmoment-Faktors einer Motoranordnung einer Aufzugsanlage**

Method for determining the inertia factor of a motor assembly of a lift assembly

Procédé destiné à déterminer le facteur de moment d'inertie d'un agencement de moteur d'une installation de levage

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.06.2011 DE 102011105342**

(43) Veröffentlichungstag der Anmeldung:
**26.12.2012 Patentblatt 2012/52**

(73) Patentinhaber: **ThyssenKrupp Aufzugswerke GmbH**
**73765 Neuhausen a.d.F. (DE)**

(72) Erfinder: **Pletschen, Ingo**
**70794 Filderstadt (DE)**

(74) Vertreter: **ThyssenKrupp Intellectual Property GmbH**
**ThyssenKrupp Allee 1**
**45143 Essen (DE)**

(56) Entgegenhaltungen:
**EP-A2- 0 306 922**

**Beschreibung**

Die vorliegende Erfindung betrifft ein Verfahren zum Ermitteln eines Trägheitsmoment-Faktors einer elektrischen Motoranordnung einer Aufzugsanlage, wobei ein Abtrieb der Motoranordnung über ein Tragseil mit einem Fahrkorb verbunden ist.

Ferner betrifft die vorliegende Erfindung ein Verfahren zum Einstellen eines Regelkreises einer solchen Aufzugsanlage, wobei wenigstens ein Reglerparameter auf der Grundlage eines Trägheitsmomentes der Motoranordnung eingestellt wird.

Schließlich betrifft die vorliegende Erfindung eine Steuereinrichtung für eine Aufzugsanlage sowie eine Aufzugsanlage als solche.

Bei der Steuerung von Aufzugsanlagen sind verschiedene Anforderungen zu erfüllen. Zum einen ist zumindest im Bereich von Haltestellen eine hohe Positionsgenauigkeit erforderlich, damit am Übergang zwischen Fahrkorb und Fahrschachttür keine Stufe entsteht. Ferner wird üblicherweise gefordert, dass der Fahrkorb mit einer möglichst hohen Geschwindigkeit zwischen den Haltestellen bewegt wird, um die Wartezeiten für Fahrgäste zu minimieren. Schließlich ist auch der Komfort der Antriebssteuerung von hoher Bedeutung. Insbesondere wird generell gefordert, dass das Anfahren und das Abbremsen möglichst ruckfrei erfolgen sollen. Darüber hinaus sind bei der Steuerung von Aufzugsanlagen hohe Sicherheitsanforderungen zu erfüllen, die jedoch im Rahmen der vorliegenden Anmeldung nicht näher betrachtet werden.

Der Antrieb einer Aufzugsanlage stellt üblicherweise eine Kraft oder ein Drehmoment bereit. Im Falle einer Treibscheiben-Aufzugsanlage wird die Treibscheibe zum Antreiben des Fahrkorbes generell mittels eines elektrischen Motors angetrieben. Der Elektromotor muss dabei in der Regel mehrere Drehmoment-Komponenten bereitstellen. Eine Drehmoment-Komponente ist typischerweise die so genannte Lastdifferenz, die hervorgerufen wird durch die Differenz zwischen dem - beladenen oder unbeladenen - Fahrkorb und einem Gegengewicht. Die Lastdifferenz ist während einer Aufzugsfahrt von einer Haltestelle zur nächsten Haltestelle konstant. Die zweite Komponente ist bei Treibscheiben-Aufzugsanlagen generell die durch die Seilmassen auf der Fahrkorbseite einerseits und der Gegengewichtsseite andererseits hervorgerufene Seillastdifferenz. Die Seillastdifferenz ist in der Regel positionsabhängig. Die dritte Komponente ist das zum Beschleunigen und Abbremsen bereitzustellende Drehmoment.

Die bei unterschiedlichen Aufzugfahrten durchzuführenden Regelungen sind dem Grunde nach immer ähnlich und unterscheiden sich im Wesentlichen durch die Beladung des Fahrkorbes und die jeweilige absolute Position des Fahrkorbes. Um das Führungsverhalten der Regelung zu verbessern, ist es bekannt, den Regelkreis mit einer Vorsteuerung zu beaufschlagen. Die Vorsteuerung kann dabei den für eine jeweilige Aufzugfahrt zu erwartenden Stellgrößen-Bedarf berücksichtigen.

Für eine gute Regelung der Aufzugsanlage ist es ferner von Bedeutung, wie gut die Reglerparameter eingestellt sind.

So offenbart das Dokument US-A-4,939,679 ein Verfahren zur Lastmessung in einer Aufzugsanlage, wobei eine Lastvorsteuerung in Abhängigkeit von Messungen im stationären Zustand eingestellt wird, indem festgestellt wird, bei welchem Drehmoment der Fahrkorb gehalten werden kann, ohne sich auf und ab zu bewegen ("roll back").

Eine Lastmesseinrichtung zum Messen der Last eines Fahrkorbes ist aus dem Dokument US-A-5,172,782 bekannt.

In dem Dokument US-A-5,343,003 wird ein Verfahren zum Kalibrieren eines A/D-Wandlers innerhalb eines Lastmesssystems einer Aufzugsanlage beschrieben, das ebenfalls im stationären Zustand des Fahrkorbes durchgeführt wird und nach der Art einer Waagenkalibrierung durchgeführt wird.

Aus der Schrift EP 0 936 730 A2 ist ein Verfahren zur Einstellung einer Steuereinrichtung für einen feldorientiert geregelten Drehfeldmotor einer Aufzugsanlage bekannt, wobei aus verschiedenen Reglerparametern ein Systemträgheitsparameter für den Motorregler berechnet wird. Dabei wird zunächst in Tests mit stehendem Fahrkorb eine Mehrzahl von Reglerparametern und ein Vorsteuerungs-Längsstrom bestimmt. In einem anschließenden Test mit fahrendem Fahrkorb erfolgt eine Feineinstellung bestimmter Reglerparameter und des Längsstromes.

Es ist ferner bekannt (US-A-5,407,030), ein Lastmesssystem einer Aufzugsanlage unter Verwendung eines Motorstromes dynamisch zu rekalibrieren. Auch bekannt ist die automatische Kalibrierung einer Motordrehzahlregelschleife einer Aufzugssteuerung (US-A-5,880,416), wie bereits oben erwähnt.

Weitere Verfahren zum Übermitteln eines Trägheitsmoment-Faktors in Aufzugsanlagen sind bekannt aus den Dokumenten EP 408 903 A1, EP 1 612 923 A1, DE 10 2005 028 842 A1, DE 4 327 539 A1 und WO 2010/055555 A1.

Für eine gute Einstellung des Regelkreises der Aufzugsanlage kann es von Bedeutung sein, das Trägheitsmoment der bereits in die Aufzugsanlage integrierten Motoranordnung zu ermitteln.

Dabei ist die Einstellung des Regelkreises vorzugsweise in einem Zustand vorzunehmen, bei dem die Aufzugsanlage bereits komplett installiert ist, die Motoranordnung also über das Tragseil bereits mit dem Fahrkorb verbunden ist. Bei einer noch nicht angebundenen Motoranordnung lässt sich deren Trägheitsmoment beispielsweise durch Vorgabe eines konstanten Motorstroms und durch Messung der resultierenden Beschleunigung ermitteln. Mit diesem Verfahren würde bei angekoppelter Motoranordnung jedoch das Systemträgheitsmoment der gesamten Aufzugsanlage ermittelt werden.

Für die Einstellung eines PI-Reglers eines derartigen Regelkreises ist das Verfahren nach Ziegler-Nichols bekannt. Hierbei wird der P-Anteil so lange erhöht, bis der Motor brummt. Der P-Anteil wird dann auf den halben Wert eingestellt. Das Erfassen eines solchen "Brummens" ist für einen automatischen Algorithmus schwierig, weshalb dieses Verfahren nicht zum Automatisieren geeignet ist.

Ferner ist es bekannt, den Regelkreis durch ein breitbandiges, pseudobinäres Rauschen anzuregen. Hierdurch kann die gesamte Übertragungsfunktion inklusive der an die Motoranordnung angekoppelten Massen ermittelt werden. Dabei hat die Gesamtübertragungsfunktion eine hohe Ordnung, und es müssen bei einem derartigen Verfahren entsprechend viele Parameter geschätzt werden. Zudem wird eine solche Schätzung stark von der Reibung des Fahrkorbes an dessen Führungsschienen beeinflusst. Folglich ist dieses Verfahren nicht sehr robust.

Eine gute Einstellung des Regelkreises ist wichtig, um Störgrößen, die nicht durch eine Vorsteuerung ausgeglichen werden können, schnell und gut gedämpft auszuregeln. Unter diese Störgrößen fällt z.B. die Reibung.

Vor dem obigen Hintergrund ist es eine Aufgabe der Erfindung, ein Verfahren zum Ermitteln dieses Motorträgheitsmomentes sowie ein verbessertes Verfahren zum Einstellen eines Regelkreises auf der Grundlage eines derart ermittelten Trägheitsmomentes anzugeben.

Diese Aufgabe wird gelöst durch ein Verfahren zum Ermitteln eines Trägheitsmoment-Faktors einer elektrischen Motoranordnung einer Aufzugsanlage, wobei ein Abtrieb der Motoranordnung über ein Tragseil mit einem Fahrkorb verbunden ist, mit den Schritten, die Motoranordnung mit einem Anregungssignal anzuregen, das eine Frequenz im Bereich von 10 Hz bis 100 Hz aufweist, eine Bewegung des Abtriebs zu erfassen und zumindest aus dem erfassten Bewegungssignal den Trägheitsmoment-Faktor zu schätzen.

Ferner wird die obige Aufgabe gelöst durch ein Verfahren zum Einstellen eines Regelkreises einer Aufzugsanlage, wobei die Aufzugsanlage eine Motoranordnung aufweist, die über ein Tragseil mit einem Fahrkorb der Aufzugsanlage verbunden ist, mit den Schritten, wenigstens einen Reglerparameter des Regelkreises auf der Grundlage eines Trägheitsmoment-Faktors der Motoranordnung einzustellen, wobei der Trägheitsmoment-Faktor durch das obige Verfahren ermittelt wurde.

Schließlich wird die obige Aufgabe gelöst durch eine Steuereinrichtung für eine Aufzugsanlage, mit einem Regelkreis, der gemäß dem obigen Verfahren eingestellt ist, und durch eine Aufzugsanlage mit einem Fahrkorb, einer Motoranordnung und einer solchen Steuereinrichtung.

Das erfindungsgemäße Verfahren zum Ermitteln des Trägheitsmoment-Faktor einer elektrischen Motoranordnung einer Aufzugsanlage, bei der ein Abtrieb der Motoranordnung über ein Tragseil mit einem Fahrkorb verbunden ist, die Motoranordnung also an den Fahrkorb angekoppelt ist, ermöglicht durch die Anregung mit einem Anregungssignal im Bereich von 10 bis 100 Hz, dass die an die Motoranordnung angekoppelten Massen (von Fahrkorb, Gegengewicht, Seilen, etc.) quasi entkoppelt werden.

Hierbei wird von der Tatsache Gebrauch gemacht, dass sich die Übertragungsfunktionen der Motoranordnung mit angekoppeltem Fahrkorb einerseits und ohne angekoppelten Fahrkorb andererseits oberhalb von Anregungsfrequenzen von etwa 10 Hz aneinander annähern. Dies ist im Wesentlichen dadurch begründet, dass bei Frequenzen ab 10 Hz, insbesondere ab 20 Hz, die an die Motoranordnung angekoppelten Massen aufgrund ihrer Größe solchen Anregungen nicht mehr "folgen" können.

Aus dem resultierenden Bewegungssignal der Motoranordnung lässt sich folglich der Trägheitsmoment-Faktor der elektrischen Motoranordnung schätzen.

Dies kann im Rahmen eines automatisierten Verfahrens erfolgen, wobei beispielsweise bei der Inbetriebnahme der Aufzugsanlage durch geeignete Softwaresteuerung die Anregung in dem genannten Frequenzbereich erfolgt und mittels in der Regel ohnehin vorhandener Sensoren die Bewegung des Abtriebs der Motoranordnung erfasst wird.

Ferner ist es von Vorteil, dass bei diesem Verfahren die Reibung des Fahrkorbes nicht in die Ermittlung des Trägheitsmoment-Faktors eingeht, so dass eine sehr robuste Schätzung möglich ist.

Mit dem erfindungsgemäßen Verfahren zum Einstellen eines Regelkreises ist es beispielsweise möglich, den Proportional-Anteil und den Integral-Anteil eines PI-Reglers einzustellen, der als Drehzahl- bzw. Geschwindigkeitsregler in dem Regelkreis verwendet wird und der einem Stromregler zur Ermittlung eines Motorstroms für die Motoranordnung überlagert ist.

In diesem Fall hängen die PI-Werte des Reglers insbesondere von der Zeitkonstanten des unterlagerten Stromreglers und einem Faktor $c/J_m$ ab, wobei $c$ die Motorkonstante ($c = M\_mot/i\_q$) ist und wobei $J_m$ die Trägheit der Motoranordnung ist. Daher ist ein Ziel der automatisierten Reglereinstellung bspw. die Ermittlung des Faktors $c/J_m$, wobei, wenn $c$ bekannt ist, daraus auch das Trägheitsmoment der Motoranordnung berechnet werden kann, auch wenn dieses ggf. nicht für die Reglereinstellung notwendig ist.

Der erfindungsgemäß ermittelte Trägheitsmoment-Faktor kann das Trägheitsmoment sein oder aber ein hiervon abhängiger Faktor wie der Faktor $c/J_m$.

Die Zeitkonstante des Stromreglers ist auch automatisiert relativ einfach zu ermitteln, indem die Verzögerung bzw. Phasenverschiebung von Sollstrom zu Iststrom gemessen wird.

Das Trägheitsmoment der Motoranordnung kann ebenfalls automatisiert durch das oben genannte Verfahren ermittelt werden, so dass eine automatisierte Einstellung der PI-Werte des Drehzahlreglers möglich ist. Insgesamt lässt sich durch die erfindungsgemäßen Verfahren die Komplexität bei der Inbetriebnahme der Aufzugsanlage reduzieren, da vorzugsweise keine manuellen Einstellarbeiten erforderlich sind. Durch gut eingestellte Reglerparameter wird eine Steigerung der Sicherheit (Haltegenauigkeit) und des Komforts (schnelles Ausregeln von Störungen) erzielt.

Die erfindungsgemäßen Verfahren können sowohl bei der Inbetriebnahme als auch während des laufenden Betriebs durchgeführt werden, insbesondere während Wartungszeiten.

Die Motoranordnung beinhaltet die mechanisch fest an den Motor gekoppelten Massen. In der Regel sind das die beweglichen Massen des elektrischen Motors (d.h. Welle plus Rotor) und die Masse der Treibscheibe, während der Fahrkorb und das Gegengewicht über die Tragseile nur elastisch mit der Treibscheibe verbunden sind.

Die Aufgabe wird somit vollkommen gelöst.

Generell ist es möglich, aus dem erfassten Bewegungssignal das Trägheitsmoment der elektrischen Motoranordnung auf verschiedene Art und Weise zu schätzen.

Gemäß einer bevorzugten Ausführungsform wird bei der Schätzung des Trägheitsmoment-Faktors ein Verhältnis der Amplitude des Anregungssignals oder der Amplitude eines sich hieraus ergebenden Istsignals und der Amplitude des Bewegungssignals berücksichtigt.

Dieses Verhältnis ist vorzugsweise proportional zu dem Trägheitsmoment-Faktor.

Von besonderem Vorzug ist es dabei, wenn der Trägheitsmoment-Faktor mittels der Formel

$$\frac{c}{Jm} = \frac{\hat{y}_2}{\hat{y}_1} \cdot 2\pi f$$

ermittelt wird, wobei

Jm = Trägheitsmoment der Motoranordnung

c = Motorkonstante der Motoranordnung

$\hat{y}_1$ = Amplitude des Istsignals

$\hat{y}_2$ = Amplitude des Bewegungssignals, und

f = Frequenz des Istsignals.

Bei dieser Trägheitsmomentermittlung geht auch die Konstante der Motoranordnung mit ein, die in der Regel eine bekannte Größe ist und das Verhältnis von Motormoment zu Motorstrom darstellt.

Insgesamt ist es gemäß einer Ausführungsform bevorzugt, wenn das Anregungssignal als Störgröße auf einen Regelkreis aufgeschaltet wird, mittels dessen die Aufzugsanlage geregelt wird.

Auf diese Weise kann die Motoranordnung vergleichsweise einfach angeregt werden.

Dabei versteht sich, dass der Regelkreis üblicherweise durch eine Software realisiert ist, so dass das Anregungssignal ebenfalls vorzugsweise softwaretechnisch erzeugt wird und auf den Algorithmus des Regelkreises aufgeschaltet wird.

Dabei ist es von besonderem Vorteil, wenn der Regelkreis einen Stromregelkreis und einen vorzugsweise überlagerten Geschwindigkeitsregler aufweist, dessen Ausgang mit dem Eingang des Stromregelkreis verbunden ist, wobei das Anregungssignal als Störgröße auf den Eingang des Stromregelkreis aufgeschaltet wird.

Bei dieser Ausführungsform erfolgt eine direkte Aufschaltung des Anregungssignals. Der Ausgang des Stromreglers ist bspw. eine Spannung, mit der der elektrische Motor der Motoranordnung betrieben wird, woraus sich wiederum der Ist-Strom entsprechend einstellt.

Ferner ist es hierbei bevorzugt, wenn das Bewegungssignal auf den Eingang des Geschwindigkeitsreglers geschaltet wird. Hierbei ist der Geschwindigkeitsregler vorzugsweise mit einer niedrigen Bandbreite parametriert, um den Aufzug in Balance zu halten und um dennoch nicht die Schätzung der Motorträgheit zu beeinflussen.

Bei dieser Ausführungsform kann folglich der auch im Betrieb verwendete Regelkreis verwendet werden, bei dem der Eingang des Geschwindigkeitsreglers mit einem Istwert der Bewegung beaufschlagt wird, insbesondere mit einem Istwert der Bewegung der Treibscheibe.

Die eigentliche Einstellung des Regelkreises kann auf der Grundlage des Trägheitsmomentes und ggf. über die anderweitig geschätzte oder bekannte Zeitkonstante des Stromreglers durch an sich bekannte Einstellregeln erfolgen, wie beispielsweise das Auslegungsverfahren gemäß dem "symmetrischen Optimum". Bei diesem Auslegungsverfahren können die PI-Werte eines PI-Stromreglers beispielsweise wie folgt ermittelt werden:

$$\text{Nachstellzeit (I-Anteil):} \quad T_n = 4 \cdot T_{Strom},$$

wobei

$T_{Strom}$ die Zeitkonstante des Regelkreises ist;

Verstärkung (P-Anteil): $K_P = Jm/(c \cdot 2 \cdot T_{Strom})$.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:

Fig. 1    eine schematische Darstellung einer erfindungsgemäßen Aufzugsanlage;

Fig. 2    ein schematisches Blockschaltbild eines Regelkreises zum Regeln der Aufzugsanlage der Fig. 1;

Fig. 3    ein Diagramm von Übertragungsfunktionen über der Frequenz von einer an eine Aufzugsanlage angekoppelten Motoranordnung und von einer von der Aufzugsanlage entkoppelten Motoranordnung;

Fig. 4    ein der Fig. 2 vergleichbares Blockschaltbild des Regelkreises, bei dem eine Motoranordnung aufgrund eines Anregungssignals von der Aufzugsanlage quasi entkoppelt ist;

Fig. 5    eine Ausführungsform eines Anregungssignals über der Zeit;

Fig. 6    eine Darstellung eines Bewegungssignals über der Zeit; und

Fig. 7    ein schematisches Blockschaltbild zur Darstellung einer orthogonalen Korrelation.

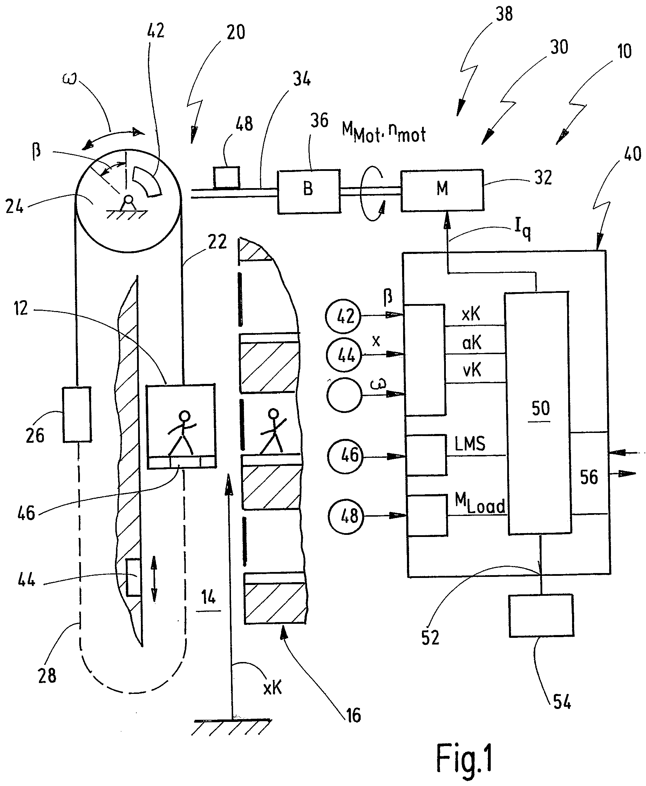

In Fig. 1 ist eine Aufzugsanlage für ein Gebäude in Form eines Personenaufzuges oder eines Lastaufzuges generell mit 10 bezeichnet.

Die Aufzugsanlage 10 weist einen Fahrkorb 12 auf, der in einem Schacht 14 eines Gebäudes 16 auf- und abbewegbar ist.

Zu diesem Zweck beinhaltet die Aufzugsanlage 10 einen Seiltrieb 20. Der Seiltrieb 20 weist ein Tragseil 22 auf, dessen eines Ende mit dem Fahrkorb 12 verbunden ist. Das andere Ende des Tragseils 22 ist mit einem Gegengewicht 26 verbunden. Das Tragseil 22 ist über eine Treibscheibe 24 geführt, die drehbar und üblicherweise im Bereich eines oberen Abschnittes des Schachtes an dem Gebäude 16 gelagert ist.

Bei 28 ist schematisch ein Unterseil 28 gezeigt, über das unterschiedliche Seilmassen auf der Fahrkorbseite einerseits und der Gegengewichtsseite andererseits zumindest teilweise ausgeglichen werden können.

Eine Antriebseinheit 30 weist eine elektrische Maschine 32 auf, die in der Regel ausschließlich als Elektromotor betrieben wird. Die elektrische Maschine 32 ist vorzugsweise als Drehfeldmaschine ausgebildet, insbesondere als Asynchronmaschine oder permanent erregte Synchronmaschine.

Die elektrische Maschine 32 weist eine Ausgangswelle 34 auf, die mit der Treibscheibe 24 verbunden ist. An der Welle 34 kann ferner eine Bremse 36 vorgesehen sein, auf deren Funktion jedoch im Rahmen der vorliegenden Anmeldung nicht näher eingegangen wird.

Über die Welle 34 kann auf die Treibscheibe 24 ein Motormoment M_Mot ausgeübt werden, wobei die Welle 34 mit einer Drehzahl n_Mot dreht. Ein jeweiliger Drehwinkel der Treibscheibe 24 ist schematisch bei $\beta$ gezeigt, bei einer Winkeldrehgeschwindigkeit $\omega$ und einer Winkelbeschleunigung $\alpha$. Ferner ist bei 38 schematisch eine Motoranordnung angedeutet, die im Wesentlichen durch die drehenden Massen der elektrischen Maschine 32, der Welle 34 und der Treibscheibe 24 gebildet ist.

Zur Regelung der Aufzugsanlage 10 ist eine Steuereinrichtung 40 vorgesehen. Die Steuereinrichtung 40 empfängt üblicherweise ein Signal von einem Winkelsensor 42, der den Drehwinkel $\beta$ der Treibscheibe 24 sowie die jeweiligen Umdrehungen erfasst. Der Drehwinkel β kann jedoch auch sensorlos erfasst werden. Der Drehwinkel β ist im Wesentlichen proportional zu der jeweiligen Position xK des Fahrkorbes. Die Steuereinrichtung 40 empfängt ferner ein Signal eines Wegsensors 44, der bspw. im Bereich einer Haltestelle (oder bei allen Haltestellen) des Fahrkorbes 12 angeordnet sein kann. Da aufgrund von Dehnung des Seiles 22 und sonstigen Einflüssen die Position des Fahrkorbes 12 nicht immer hundertprozentig proportional ist zu dem Drehwinkel β, kann durch einen derartigen Wegsensor 44 im Bereich einer oder mehrerer Haltestellen eine genaue Positionierung des Fahrkorbes 12 an diesen Haltestellen erfolgen.

Ferner empfängt die Steuereinrichtung 40 ein Winkelgeschwindigkeitssignal ω.

Wie es in Fig. 1 schematisch dargestellt ist, können der Drehwinkel β, das Signal x des Wegsensors 44 und ggf. das Winkelgeschwindigkeitssignal ω umgerechnet werden in eine Fahrkorbposition xK und eine Fahrkorbgeschwindigkeit vK.

Die Steuereinrichtung 40 ist ferner mit einem Lastmesssensor 46 verbunden. Der Lastmesssensor 46 liefert vorzugsweise ein Signal, das die prozentuale Beladung des Fahrkorbes 12 angibt, im Bereich von 0 % (keine Beladung) bis 100 % (Maximalbeladung). Die Steuereinrichtung 40 errechnet hieraus ein Lastmesssignal LMS, dessen Wertebereich von 0 bis 1 geht.

Schließlich empfängt die Steuereinrichtung 40 ein Signal eines Drehmomentsensors 48, der das auf den Motor wirkende Lastmoment M_Load repräsentiert.

Die obigen Messwerte werden einem Regelkreis 50 eingegeben, der hieraus einen Motorstrom Iq erzeugt, bei dem es sich vorzugsweise um einen Querstrom einer feldorientiert geregelten Drehfeldmaschine 32 handelt. Ein Längsstrom einer derartigen Drehfeldmaschine wird üblicherweise auf Null eingestellt. Der Querstrom Iq ist in der Regel proportional zu dem von dem Motor 30 abgegebenen Drehmoment. Demzufolge kann der Drehmomentsensor 48 auch als Stromsensor ausgebildet sein, der die Größe des Motorstromes Iq misst.

In Fig. 1 ist ferner dargestellt, dass die Steuereinrichtung 40 eine I/O-Schnittstelle aufweist, die bspw. an ein Eingabegerät 54 (ein Notebook oder dergleichen) angeschlossen werden kann. Über die Schnittstelle 52 kann die Steuereinrichtung 40 folglich programmiert werden. Ferner ist der Vollständigkeit halber bei 56 eine Überwachungseinrichtung 56 gezeigt, die bspw. Sicherheitssensoren (wie Fahrschachttür offen etc.) abfragt und auswertet. Diese Überwachungseinrichtung 56 ist dem Regelkreis 50 generell übergeordnet, so dass die Überwachungseinrichtung 56 bspw. unabhängig von dem Ausgang des Regelkreises die Bremse 36 betätigen kann, etc.

Der Regelkreis 50 stellt einen Strom Iq des Elektromotors 32. Es versteht sich, dass zwischen der Steuereinrichtung 40 und dem Elektromotor 32 noch eine geeignete Leistungselektronik vorgesehen sein kann, die jedoch vorliegend nicht dargestellt ist.

Für die Regelung der Aufzugsanlage ist zu berücksichtigen, dass der Elektromotor 32 ein Motormoment M_Mot bereitstellen muss, das zum einen die statischen Lastbedingungen berücksichtigt. Zum anderen muss das Motormoment M_Mot zum Durchführen von Aufzugsfahrten ein Beschleunigungs- oder ein Abbremsmoment bereitstellen.

Bei der Regelung der statischen Lasten ist zum einen der Unterschied zwischen dem Gewicht des Fahrkorbes 12 und dem Gegengewicht 26 zu berücksichtigen. Die Masse des Gegengewichtes 26 wird vorzugsweise so gewählt, dass das Gegengewicht 26 dem Gewicht des leeren Fahrkorbes 12 zuzüglich einem Wert von bspw. 40 bis 50 % der maximalen Zuladung des Fahrkorbes entspricht.

Ferner ist bei der Regelung zu berücksichtigen, dass je nach Fahrkorbposition xK in der Regel unterschiedliche Seilmassen auf der Fahrkorbseite einerseits und der Gegengewichtsseite andererseits auszugleichen sind.

Bei Beginn einer Aufzugsfahrt wird zunächst die Bremse 36 gelöst. Je nach Beladungszustand und Fahrkorbposition xK ergibt sich ein unterschiedlicher Lastunterschied zwischen Gegengewichtsseite und Fahrkorbseite. Dieser Lastunterschied ist mittels eines Drehzahlreglers in der Regel nicht sofort ausgleichbar, so dass bei einer reinen Drehzahlregelung beim Anfahren im Fahrkorb ein Ruck spürbar wäre. Daher muss von dem Elektromotor 32 bereits beim Öffnen der Bremse 36 ein Drehmoment M_Mot bereitgestellt werden, das genau dieser jeweiligen Lastdifferenz entspricht. Dieses Drehmoment wird vorzugsweise durch eine Lastvorsteuerung unabhängig von einem Drehzahlregelkreis bereitgestellt.

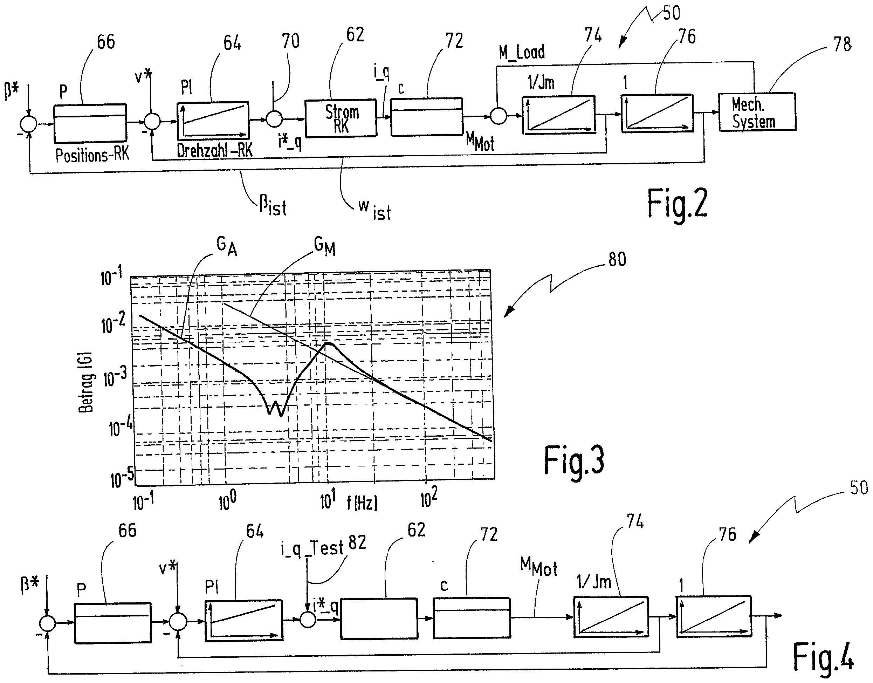

In Fig. 2 ist ein Ausführungsbeispiel eines Regelkreises 50 für die Steuereinrichtung 40 in schematischer Form als Blockschaltbild dargestellt.

Der Regelkreis 50 besitzt einen Stromregelkreis 62, dessen Eingang einen Stromsollwert i_q* erhält. Der Ausgang (Regelgröße i_q) des Stromregelkreises 62 ergibt über die Motorkonstante c=M_mot/iq ein entsprechendes Drehmoment.

Dem Stromregelkreis 62 ist ein Drehzahlregler 64 vorgeschaltet, der bspw. als PI-Regler ausgebildet sein kann. Der Drehzahlregler 64 erhält am Eingang eine Regelabweichung zwischen einem Geschwindigkeitssollwert v* und der gemessenen Winkelgeschwindigkeit ω, die auf eine Geschwindigkeit umgerechnet ist, und ist ferner mit dem Ausgang eines Positionsreglers 66 verbunden. Der Positionsregler 66 ist als Proportionalregler (P) ausgebildet und erhält eine Regelabweichung zwischen einem Positionssollwert x* und dem gemessenen Drehwinkel β (umgerechnet auf eine Position).

Der Drehzahlregler 64 erzeugt einen Ausgangswert, der auf den Eingang des Stromregelkreises 62 gelegt wird und einen Sollwert des Stromregelkreises 62 darstellt.

Bei einem kaskadierten Regelkreis 50 dieser Art kann der Drehzahlregler 64, wie oben beschrieben, in der Regel nicht schnell genug arbeiten, um einen weitgehend ruckfreien Betrieb der Aufzugsanlage zu gewährleisten.

Aus diesem Grund wird dem Ausgang des Drehzahlreglers 64 ein Vorsteuerungssollwert aufgeschaltet. Der Vorsteuerungssollwert 70 ist eine Summe aus einem Lastvorsteuerungswert und einem Beschleunigungsvorsteuerungswert.

Der von dem Stromregelkreis 62 erzeugte Iststrom i_q geht in einen Block, der in Fig. 2 mit 72 bezeichnet ist und die Motorkonstante c darstellt. Der Motor erzeugt ein Drehmoment $M_{Mot}$, dem ein Lastmoment M_Load eines mechanischen Systems 78 entgegenwirkt, das den Fahrkorb, die Seile etc. beinhaltet. Das resultierende Moment wirkt auf einen Block 74, der das Trägheitsmoment Jm der Motoranordnung 38 repräsentiert. Genauer gesagt bildet der Block 74 eine Funktion 1/Jm, deren Ausgang die Istwinkeldrehzahl $\omega_{ist}$ bzw. eine hieraus errechnete Istgeschwindigkeit $v_{ist}$ ist. Ein Block 76 stellt einen Integrator dar, dessen Ausgang einen Istdrehwinkel $\beta_{ist}$ bzw. eine hieraus errechnete Istposition $x_{ist}$ des mechanischen Systems 78 darstellt.

Bei Inbetriebnahme der Aufzugsanlage 10 muss der Regelkreis 50 eingestellt werden. Von besonderer Bedeutung ist dabei die Einstellung des Drehzahlreglers 64, um Störgrößen, die nicht durch die Vorsteuerung 70 ausgeglichen werden, schnell und gut gedämpft ausregeln zu können. Eine derartige Störgröße ist beispielsweise die Reibung, insbesondere eine Reibung zwischen Fahrkorb 12 und Schienen, an denen dieser geführt wird.

Der Drehzahlregler 64 ist vorliegend als PI-Regler ausgebildet. Die PI-Werte (Proportional-Anteil P und Integral-Anteil I) hängen insbesondere von der Zeitkonstanten des unterlagerten Stromregelkreises 62 und dem Faktor c/Jm ab. Die Zeitkonstante lässt sich vergleichsweise einfach ermitteln durch Messen der Verzögerung von Sollstrom zu Iststrom (i_q* zu i_q).

Demzufolge ist für eine gute Einstellung des Drehzahlreglers 64 insbesondere der Faktor c/Jm der Motoranordnung 38 zu ermitteln.

Da bei Inbetriebnahme die Treibscheibe 24 jedoch bereits über den Seiltrieb 20 mit dem Fahrkorb 12 und dem Gegengewicht 26 gekoppelt ist, kann das Trägheitsmoment nicht einfach durch Vorgabe eines konstanten Iststroms und Messen der sich hieraus resultierenden Beschleunigung ermittelt werden. Denn hierbei würde das Systemträgheitsmoment der gesamten Aufzugsanlage ermittelt.

Vorliegend wird daher die Motoranordnung mit einem Anregungssignal angeregt, das eine Frequenz im Bereich von 10 Hz bis 100 Hz aufweist.

Fig. 3 zeigt die Übertragungsfunktionen des Regelkreises über der Frequenz. Dabei zeigt eine Kurve $G_A$ eine Übertragungsfunktion des Regelkreises 50 bei angekoppeltem mechanischem System 78. Bei $G_M$ ist eine Übertragungsfunktion gezeigt, die sich bei abgekoppeltem mechanischen System 78 ergibt. Hierbei ist der Drehzahlregler vorzugsweise mit einer niedrigen Bandbreite parametriert (z. B. kleiner 10 Hz), so dass sein Einfluss auf die Übertragungsfunktion insbesondere bei hohen Frequenzen vernachlässigbar ist. Der Betrag der Übertragungsfunktion $G_M$ ergibt sich daher wie folgt:

$$|G_M(f)| = |\omega\_ist/i\_q| = |c/(Jm*s)| = c/Jm * 1/(2*pi*f),$$

wobei

s = Laplace-Operator,

c = Motorkonstante der Motoranordnung,

Jm = Trägheitsmoment der Motoranordnung,

f = Frequenz.

Es ist zu erkennen, dass etwa ab 10 Hz, insbesondere ab etwa 20 Hz die Übertragungsfunktionen $G_A$, $G_M$ fast oder vollständig identisch sind. Dieser Sachverhalt wird sich vorliegend zunutze gemacht, indem man den Regelkreis mit einer Frequenz von größer 10 Hz, insbesondere größer 20 Hz anregt. Generell könnte die Anregungsfrequenz auch höher als 100 Hz sein. Vorteilhafterweise liegt die Anregungsfrequenz jedoch unterhalb von 100 Hz, um den Rechenaufwand zu verringern.

Sofern der Regelkreis 50 mit einem Anregungssignal in diesem Frequenzbereich angeregt wird, ergibt sich ein Verhalten, als wäre die Motoranordnung 38 von dem mechanischen System 78 abgekoppelt.

Dies ist in Fig. 4 gezeigt, die den Regelkreis 50 zeigt, bei dem die Motoranordnung 38 von dem mechanischen System 78 entkoppelt ist. Insbesondere wirkt auf das Motormoment $M_{Mot}$ in diesem Fall kein Lastmoment M_Load.

Dies wird erreicht, indem auf den Eingang des Stromreglers 62 ein Anregungssignal 82 in dem oben genannten Frequenzbereich aufgeschaltet wird, und zwar als Störgröße.

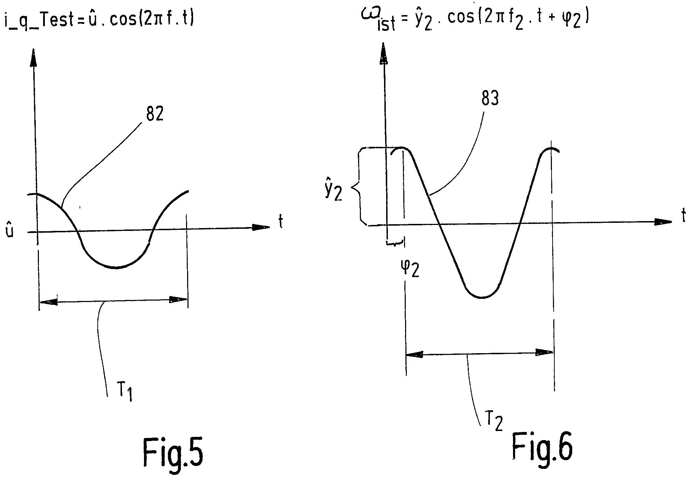

Fig. 5 zeigt dieses Anregungssignal 82, das beispielhaft als Cosinussignal mittels eines geeigneten Generators erzeugt wird zu

$$i\_q\_Test = \hat{u} \cos (2\pi f \cdot t),$$

wobei $\hat{u}$ die Amplitude des Anregungssignals ist und wobei f die Frequenz des Anregungssignals ist.

Hieraus ergibt sich zum einen nach dem Stromregelkreis 62 (Übertragungsfunktion G(62) = i_q/i*_q) ein Ist-Strom:

$$iq = \hat{y}_1 \cdot \cos(2\pi f_1 \cdot t + \varphi_1),$$

wobei $\hat{y}_1$ die Amplitude des Iststroms i_q ist, wobei $f_1$ die Frequenz des Iststroms i_q ist und wobei $\varphi_1$ eine Phasenverschiebung gegenüber dem Anregungssignal 82 ist.

Hieraus ergibt sich ferner bei dem Regelkreis 50 der Fig. 4 am Ausgang des Blockes 74 der Fig. 4 (bzw. Fig. 2) ein Bewegungssignal $\omega_{ist}$ in Form eines Istsignals der Treibscheibenwinkelgeschwindigkeit (proportional zur Treibscheibengeschwindigkeit) mit

$$\omega_{ist} = \hat{y}_2 \cdot \cos (2\pi f_2 \cdot t + \varphi_2),$$

wobei $\hat{y}_2$ die Amplitude des Bewegungssignals 83 ist, wobei $f_2$ die Frequenz des Bewegungssignals 83 ist und wobei $\varphi_2$ eine Phasenverschiebung gegenüber dem Anregungssignal 82 ist.

Die Perioden des Anregungssignals 82 und des Bewegungssignals 83 sind in Fig. 5 und 6 bei T und $T_2$ dargestellt und identisch, so dass $f_2 = f$.

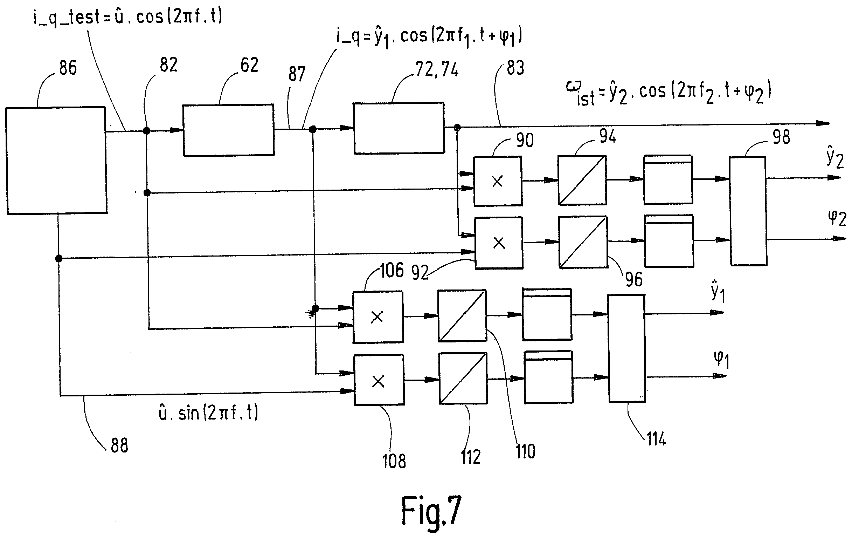

Die Werte von $\hat{y}_1$, $\hat{y}_2$ und von $\varphi_1$, $\varphi_2$ lassen sich beispielsweise durch ein Verfahren der orthogonalen Korrelation ermitteln, wie es in Fig. 7 dargestellt ist.

In Fig. 7 ist bei 86 ein Cosinus/Sinus-Generator gezeigt, der auf einem Ausgang das Anregungssignal 82 erzeugt. Das Anregungssignal 82 geht in die Regelstrecke, die gebildet ist durch den Stromregelkreis 62, den Block 72 und den Block 74, und es ergibt sich hieraus das Bewegungssignal 83 (entsprechend $\omega_{ist}$). Der sich zwischen dem Stromregelkreis 62 und dem Block 72 einstellende Iststrom i_q ist bei 87 gezeigt.

Ferner erzeugt der Cosinus/Sinus-Generator 86 ein zu dem Anregungssignal 82 um 90° verschobenes Signal in Form eines Sinussignals 88 ($\hat{u} \cdot \sin (2\pi f)$).

Um den Faktor c/Jm zu ermitteln, der durch die Blöcke 72, 74 gebildet ist, wird ein Verfahren der orthogonalen Korrelation zum einen auf das am Eingang des Blockes 72, 74 anstehende Istsignal in Form des Iststroms i_q und auf das am Ausgang dieses Blockes anstehende Bewegungssignal $\omega_{ist}$ angewendet.

Das Verfahren der orthogonalen Korrelation beinhaltet, das Istsignal 87 und das Bewegungssignal 83 in einem ersten Multiplizierer 90 miteinander zu multiplizieren und das Ergebnis in einem ersten Integrator 94 aufzuintegrieren.

Ferner beinhaltet das Verfahren, das Istsignal 87 und das Sinussignal 88 in einem zweiten Multiplizierer 92 miteinander zu multiplizieren und das Ergebnis in einem zweiten Integrator 96 aufzuintegrieren.

Die Ausgänge der zwei Integratoren 94, 96 werden (ggf. multipliziert mit Konstanten) in einen ersten Koordinatentransformationsblock 98 eingegeben, dessen Ausgang die Amplitude $\hat{y}_2$ und die Phase $\varphi_2$ des Bewegungssignals 83 darstellen.

Ferner werden zur Ermittlung der Amplitude $\hat{y}_1$ und der Phase $\varphi_1$ das Istsignal 87 und das Anregungssignal 82 eingegeben. Ferner werden das Istsignal 87 und das Sinussignal 88 in einen vierten Multiplizierer 108 eingegeben. Der Ausgang des dritten Multiplikators 106 wird in einem dritten Integrator 110 aufintegriert. Der Ausgang des vierten Multiplikators 108 wird in einem vierten Integrator 112 aufintegriert.

Die Ausgänge des dritten und des vierten Integrators 110, 112 werden (ggf. multipliziert mit Konstanten) in einen zweiten Koordinatentransformationsblock 114 eingegeben, dessen Ausgang die Amplitude $\hat{y}_1$ und die Phase $\varphi_1$ des Istsignals i_q darstellen.

Aus diesen Werten lässt sich, ggf. in Verbindung mit der Frequenz f des Anregungssignals, ein Trägheitsmoment-Faktor c/Jm ermitteln durch

$$\frac{c}{Jm} = \frac{\hat{y}_2}{\hat{y}_1} \cdot 2\pi f$$

wobei c die Motorkonstante der Motoranordnung ist, wobei Jm das Trägheitsmoment ist und wobei f die Frequenz von Anregungssignal und Bewegungssignal ist.

Gegebenenfalls könnte der Trägheitsmoment-Faktor c/Jm auch ermittelt werden über einen Quotienten der maximalen Amplitude des Bewegungssignals und der maximalen Amplitude des Anregungssignals ($\hat{y}_2/\hat{u}$). Hierbei würde die Übertragungsfunktion des Stromregelkreises 62 unberücksichtigt gelassen. Daher ist das zuerst genannte Verfahren der Ermittlung des Trägheitsmoment-Faktors c/Jm über den Quotienten $\hat{y}_2/\hat{y}_1$ in der Regel genauer.

Der Trägheitsmomentfaktor c/Jm lässt sich unmittelbar zur Reglereinstellung des pi-Reglers 60 verwenden. Alternativ kann mittels der obigen Formeln natürlich auch das Trägheitsmoment Jm als solches ausgerechnet werden.

**Patentansprüche**

1. Verfahren zum Ermitteln eines Trägheitsmoment-Faktors (Jm; c/Jm) einer elektrischen Motoranordnung (38) einer Aufzugsanlage (10), wobei ein Abtrieb der Motoranordnung (38) über ein Tragseil (22) mit einem Fahrkorb (12) verbunden ist, mit den Schritten, die Motoranordnung (38) mit einem Anregungssignal (82) anzuregen, das eine Frequenz (f) im Bereich von 10 Hz bis 100 Hz aufweist, eine Bewegung des Abtriebs zu erfassen und zumindest aus dem Verlauf des erfassten Bewegungssignals (83) den Trägheitsmoment-Faktor (Jm; c/Jm) zu schätzen.

2. Verfahren nach Anspruch 1, wobei bei der Schätzung des Trägheitsmoment-Faktors (Jm; c/Jm) ein Verhältnis der Amplitude ($\hat{u}$) des Anregungssignals (82) oder der Amplitude ($\hat{y}_1$) eines sich hieraus ergebenden Istsignals (87) und der Amplitude ($\hat{y}_2$) des Bewegungssignals (83) berücksichtigt wird.

3. Verfahren nach Anspruch 2, wobei der Trägheitsmoment-Faktor mittels der Formel

$$\frac{c}{Jm} = \frac{\hat{y}_2}{\hat{y}_1} \cdot 2\pi f$$

ermittelt wird, wobei

Jm = Trägheitsmoment der Motoranordnung
c = Motorkonstante der Motoranordnung
$\hat{y}_1$ = Amplitude des Istsignals
$\hat{y}_2$ = Amplitude des Bewegungssignals und
f = Frequenz des Istsignals.

4. Verfahren nach einem der Ansprüche 1 - 3, wobei das Anregungssignal (82) als Störgröße auf einen Regelkreis (50) aufgeschaltet wird, mittels dessen die Aufzugsanlage (10) geregelt wird.

5. Verfahren nach Anspruch 4, wobei der Regelkreis (50) einen Stromregelkreis (62) und einen Geschwindigkeitsregler (64) aufweist, dessen Ausgang mit dem Eingang des Stromregelkreises (62) verbunden ist, wobei das Anregungssignal (82) als Störgröße auf den Eingang des Stromregelkreises (62) aufgeschaltet wird.

6. Verfahren nach Anspruch 5, wobei das Bewegungssignal (83) auf den Eingang des Geschwindigkeitsreglers (64) geschaltet wird.

7. Verfahren zum Einstellen eines Regelkreises (50) einer Aufzugsanlage (10), wobei die Aufzugsanlage (10) eine Motoranordnung (38) aufweist, die über ein Tragseil (22) mit einem Fahrkorb (12) der Aufzugsanlage (10) verbunden ist, mit den Schritten, wenigstens einen Reglerparameter (P, I) des Regelkreises auf der Grundlage eines Trägheitsmoment-Faktors (Jm; c/Jm) der Motoranordnung (38) einzustellen, wobei der Trägheitsmoment-Faktor (Jm; c/Jm) durch ein Verfahren gemäß einem der Ansprüche 1- 6 ermittelt wurde.

8. Steuereinrichtung (40) für eine Aufzugsanlage, mit einem Regelkreis (50), der gemäß einem Verfahren nach Anspruch 7 eingestellt ist, wobei dieser Regelkreis (50) derart ausgebildet ist, dass das im Rahmen der Einstellung des Regelkreises (50) ausgeführte Verfahren zur Ermittlung des Trägheitsmoment-Faktors (Jm; c/Jm) nach einem der Ansprüche 1 bis 6 unter Nutzung dieses Regelkreises (50) ausgeführt wird.

9. Aufzugsanlage (10) mit einem Fahrkorb (12), einer Motoranordnung (38) und einer Steuereinrichtung (40) nach Anspruch 8.

**Claims**

1. Method for determining an inertia factor (Jm; c/Jm) of an electric motor assembly (38) of a lift assembly (10), wherein an output of the motor assembly (38) is connected via a suspension rope (22) to a lift cage (12), having the steps of exciting the motor assembly (38) with an excitation signal (82) which has a frequency (f) in the range from 10 Hz to 100 Hz, of detecting a motion of the output, and of estimating the inertia factor (Jm; c/Jm) at least from the variation in the detected motion signal (83).

2. Method according to Claim 1, wherein, when estimating the inertia factor (Jm; c/Jm), a ratio of the amplitude ($\hat{u}$) of the excitation signal (82) or of the amplitude ($\hat{y}_1$) of an actual signal (87) resulting therefrom and the amplitude ($\hat{y}_2$) of the motion signal (83) is taken into account.

3. Method according to Claim 2, wherein the inertia factor is determined by means of the formula

$$\frac{c}{Jm} = \frac{\hat{y}_2}{\hat{y}_1} \cdot 2\pi f$$

where

   Jm = inertia of the motor assembly
   c = motor constant of the motor assembly
   $\hat{y}_1$ = amplitude of the actual signal
   $\hat{y}_2$ = amplitude of the motion signal and
   f = frequency of the measured signal.

4. Method according to one of Claims 1 - 3, wherein the excitation signal (82) is connected as a disturbance variable to a control loop (50) by means of which the lift assembly (10) is controlled.

5. Method according to Claim 4, wherein the control loop (50) has a current control loop (62) and a speed controller (64), the output of which is connected to the input of the current control loop (62), wherein the excitation signal (82) is connected as a disturbance variable to the input of the current control loop (62).

6. Method according to Claim 5, wherein the motion signal (83) is connected to the input of the speed controller (64).

7. Method for adjusting a control loop (50) of a lift assembly (10), wherein the lift assembly (10) has a motor assembly (38) which is connected via a suspension rope (22) to a lift cage (12) of the lift assembly (10), having the steps of adjusting at least one control parameter (P, I) of the control loop on the basis of an inertia factor (Jm; c/Jm) of the motor assembly (38), wherein the inertia factor (Jm; c/Jm) has been determined by a method according to one of Claims 1-6.

8. Control device (40) for a lift assembly, having a control loop (50) which is adjusted in accordance with a method according to Claim 7, wherein this control loop (50) is formed in such a way that, the method for determining the inertia factor (Jm; c/Jm) according to one of Claims 1 to 6, carried out within the context of adjusting the control loop (50), is carried out by using this control loop (50).

9. Lift assembly (10) having a lift cage (12), a motor assembly (38) and a control device (40) according to Claim 8.

**Revendications**

1. Procédé de détermination d'un facteur de moment d'inertie (Jm ; c/Jm) d'un système de moteur électrique (38) d'une installation d'ascenseur (10), dans lequel un entraînement de sortie du système de moteur (38) est relié à une cabine (12) par l'intermédiaire d'un câble porteur (22), comportant les étapes consistant à attaquer le système de moteur (38) avec un signal d'attaque (82) qui présente une fréquence (f) se situant dans la plage de 10 Hz à 100 Hz, à détecter un mouvement de l'entraînement de sortie et à estimer le facteur de moment d'inertie (Jm ; c/Jm) au moins à partir de la variation du signal de mouvement (83) détecté.

2. Procédé selon la revendication 1, dans lequel, lors de l'estimation du facteur de moment d'inertie (Jm ; c/Jm), on tient compte d'un rapport entre l'amplitude (û) du signal d'attaque (82) ou l'amplitude ($\hat{y}_1$) d'un signal réel (87) issu de celui-ci et l'amplitude ($\hat{y}_2$) du signal de mouvement (83).

3. Procédé selon la revendication 2, dans lequel le facteur de moment d'inertie est déterminé au moyen de la formule suivante :

$$\frac{c}{Jm} = \frac{\hat{y}_2}{\hat{y}_1} \cdot 2\pi f$$

où

Jm = moment d'inertie du système de moteur
c = constante de moteur du système de moteur
$\hat{y}_1$ = amplitude du signal réel
$\hat{y}_2$ = amplitude du signal de mouvement et
f = fréquence du signal réel.

4. Procédé selon l'une quelconque des revendications 1 à 3, dans lequel le signal d'attaque (82) est appliqué en tant que grandeur parasite à un circuit régulateur (50) au moyen duquel l'installation d'ascenseur (10) est régulée.

5. Procédé selon la revendication 4, dans lequel le circuit régulateur (50) comporte un circuit régulateur de courant (62) et un régulateur de vitesse (64) dont la sortie est reliée à l'entrée du circuit régulateur de courant (62), dans lequel le signal d'attaque (82) est appliqué en tant que grandeur parasite à l'entrée du circuit régulateur de courant (62).

6. Procédé selon la revendication 5, dans lequel le signal de mouvement (83) est appliqué à une entrée du régulateur de vitesse (64).

7. Procédé de réglage d'un circuit régulateur (50) d'une installation d'ascenseur (10), dans lequel l'installation d'ascenseur (10) comporte un système de moteur (38) qui est relié par l'intermédiaire d'un câble porteur (22) à une cabine (12) de l'installation d'ascenseur (10), comportant les étapes consistant à régler au moins un paramètre de régulateur (P, I) du circuit régulateur sur la base d'un facteur de moment d'inertie (Jm ; c/Jm) du système de moteur (38), dans lequel le facteur de moment d'inertie (Jm ; c/Jm) a été déterminé par un procédé selon l'une quelconque des revendications 1 à 6.

8. Dispositif de commande (40) destiné à une installation d'ascenseur, comportant un circuit régulateur (50) qui est réglé conformément à un procédé selon la revendication 7, dans lequel ledit circuit régulateur (50) est configuré de manière à ce que le procédé mis en oeuvre dans le cadre d'un réglage du circuit régulateur (50) soit mis en oeuvre pour déterminer le facteur de moment d'inertie (Jm ; c/Jm) selon l'une quelconque des revendications 1 à 6 par utilisation dudit circuit régulateur (50).

9. Installation d'ascenseur (10) comportant une cabine (12), un système de moteur (38) et un dispositif de commande (40) selon la revendication 8.

Fig.1

β* P $v^*$ PI Strom RK $i\_q$ c $M_{Mot}$ 1/Jm 1 Mech. System

66 64 70 62 72 M_Load 74 50 76 78

Positions-RK Drehzahl-RK $i^*\_q$ $β_{ist}$ $w_{ist}$

**Fig.2**

$G_A$ $G_M$ 80

10⁻¹

10⁻²

Betrag |G| 10⁻³

10⁻⁴

10⁻⁵

10⁻¹ 10⁰ 10¹ 10² f [Hz]

**Fig.3**

β* P $v^*$ PI i_q_Test 82 c $M_{Mot}$ 1/Jm 1

66 64 62 72 74 50 76

$i^*\_q$

**Fig.4**

13

$$i\_q\_Test = \hat{u} \cdot \cos(2\pi f \cdot t)$$

Fig.5

$$\omega_{ist} = \hat{y}_2 \cdot \cos(2\pi f_2 \cdot t + \varphi_2)$$

Fig.6

EP 2 537 789 B1

Fig.7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4939679 A
- US 5172782 A
- US 5343003 A
- EP 0936730 A2
- US 5407030 A
- US 5880416 A
- EP 408903 A1
- EP 1612923 A1
- DE 102005028842 A1
- DE 4327539 A1
- WO 2010055555 A1